(19) Europäisches Patentamt
European Patent Office
Office européen des brevets

(11) EP 4 600 301 A1

# (12) EUROPEAN PATENT APPLICATION
published in accordance with Art. 153(4) EPC

(43) Date of publication:
**13.08.2025 Bulletin 2025/33**

(21) Application number: **23874954.3**

(22) Date of filing: **06.10.2023**

(51) International Patent Classification (IPC):
***C08L 29/04*** (2006.01) ***C08F 8/12*** (2006.01)
***C08F 16/34*** (2006.01) ***C08F 18/08*** (2006.01)

(52) Cooperative Patent Classification (CPC):
**C08F 8/12; C08F 16/34; C08F 18/08; C08L 29/04**

(86) International application number:
**PCT/JP2023/036477**

(87) International publication number:
**WO 2024/075829 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.10.2022 JP 2022161452**

(71) Applicant: **Kuraray Co., Ltd.**
**Kurashiki-shi, Okayama 710-0801 (JP)**

(72) Inventors:
- **OKAMOTO, Yuji**
  **Silom, Bangrak, Bangkok 10500 (TH)**
- **SEKI, Michinari**
  **Kurashiki-shi, Okayama 713-8550 (JP)**

(74) Representative: **Müller-Boré & Partner Patentanwälte PartG mbB**
**Friedenheimer Brücke 21**
**80639 München (DE)**

## (54) COMPOSITION, DISPERSING AGENT FOR SUSPENSION POLYMERIZATION, AND METHOD FOR PRODUCING VINYL-BASED POLYMER

(57) Provided are: a composition containing a vinyl alcohol polymer and an amphipathic substance, the composition enabling polymer particles to be obtained, which have a small average particle diameter, accompanied by few coarse particles, and are favorable in plasticizer absorptivity, even in a case in which suspension polymerization is carried out at a high temperature; a dispersant for suspension polymerization including the composition; and a method for producing a vinyl polymer. The composition of the present invention contains a vinyl alcohol polymer (A) and an amphipathic substance (B), wherein the vinyl alcohol polymer (A) is a vinyl alcohol polymer including a carbonyl group and having a degree of saponification of 60 mol% or more, and the amphipathic substance (B) includes at least one selected from a group consisting of a vinyl alcohol polymer having a degree of saponification of less than 60 mol%, and a surfactant.



Processed by Luminess, 75001 PARIS (FR)

## Description

[TECHNICAL FIELD]

The present invention relates to a composition, a dispersant for suspension polymerization, and a method for producing a vinyl polymer.

[BACKGROUND ART]

Polyvinyl alcohol polymers (hereinafter, may be also referred to as "PVAs") are known as water-soluble synthetic macromolecules. PVAs are used in various types of intended usages such as materials for films and fibers, additives for paper processing and fiber processing, adhesives, dispersion aids and dispersants (may be also referred to as "dispersion stabilizers", etc.) for emulsion polymerization and suspension polymerization, and binders for inorganic substances.

In order to, e.g., enhance performance of PVAs, practical application and development of variously modified PVAs have been carried out. For example, Patent Document 1 discloses a vinyl alcohol polymer characterized by comprising, in the same molecule or in different molecules, a carbonyl group, a formyl group, and an alkenyl group, where the vinyl alcohol polymer is described to be available as a dispersant for suspension polymerization.

[PRIOR ART DOCUMENTS]

[Patent Documents]

Patent Document 1: PCT International Publication No. 2022/071345

[SUMMARY OF THE INVENTION]

[Problems to Be Solved by the Invention]

When the PVA is to be used as a dispersant in suspension polymerization, an operation generally referred to as "hot charging" may be conducted in which an aqueous solution of the PVA is charged into a solution for polymerization having a high temperature of 60 °C or more. When the hot charging is conducted using an aqueous solution containing a conventional dispersant, aggregation of the PVA may occur, and as a result, coarse polymer particles may be obtained. In addition, even when the hot charging is not conducted, the function of the PVA as a dispersant tends to be inferior under high-temperature conditions of 60 °C or more, in polymerization conducted using a conventional PVA as a dispersant. Patent Document 1 is silent as to a dispersant that enables polymer particles to be obtained, which have a small average particle diameter, accompanied by few coarse particles, and are favorable in plasticizer absorptivity, even in a case in which suspension polymerization is carried out under high-temperature conditions.

An object of the present invention is to provide: a composition containing a vinyl alcohol polymer and an amphipathic substance, the composition enabling polymer particles to be obtained, which have a small average particle diameter, accompanied by few coarse particles, and are favorable in plasticizer absorptivity, even in a case in which suspension polymerization is carried out at a high temperature; a dispersant for suspension polymerization including the composition; and a method for producing a vinyl polymer.

[Means for Solving the Problems]

The above-described object is achieved by providing any one of the following:

(1) A composition containing: a vinyl alcohol polymer (A); and an amphipathic substance (B), wherein the vinyl alcohol polymer (A) is a vinyl alcohol polymer including a carbonyl group and having a degree of saponification of 60 mol% or more, and the amphipathic substance (B) includes at least one selected from a group consisting of a vinyl alcohol polymer having a degree of saponification of less than 60 mol%, and a surfactant;
(2) The composition according to (1), wherein the vinyl alcohol polymer (A) further includes a formyl group and an alkenyl group;
(3) The composition according to (1) or (2), wherein the vinyl alcohol polymer (A) has a structure represented by the following formula (1) including the carbonyl group,

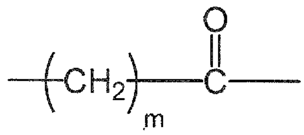

( 1 )

wherein, in the formula (1), m is an integer of 1 to 11;

(4) The composition according to any one of (1) to (3), wherein the vinyl alcohol polymer (A) includes, at an end of a polymer chain, a group represented by the following formula (2) including the carbonyl group;

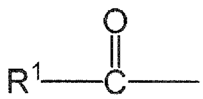

( 2 )

wherein, in the formula (2), $R^1$ represents an alkenyl group or an alkyl group;

(5) The composition according to (4), wherein $R^1$ in the formula (2) represents the alkenyl group, and the alkenyl group includes a methylene group at an end on a side of the carbonyl group;

(6) The composition according to any one of (1) to (5), wherein the vinyl alcohol polymer (A) has a tertiary carbon atom;

(7) The composition according to any one of (1) to (6), wherein the vinyl alcohol polymer (A) has a structural unit derived from an unsaturated aliphatic aldehyde;

(8) The composition according to (7), wherein the unsaturated aliphatic aldehyde has 3 to 14 carbon atoms;

(9) The composition according to (7) or (8), wherein the unsaturated aliphatic aldehyde has, at an end thereof, a carbon-carbon double bond;

(10) The composition according to any one of (1) to (9), wherein the amphipathic substance (B) includes, as the surfactant, at least one selected from a group consisting of an anionic surfactant and a nonionic surfactant;

(11) The composition according to (10), wherein the amphipathic substance (B) includes, as the anionic surfactant, at least one selected from a group consisting of an acyl amino acid salt and an acyl taurine salt;

(12) The composition according to any one of (1) to (11), wherein the amphipathic substance (B) includes, as the vinyl alcohol polymer having a degree of saponification of less than 60 mol%, an anion-modified vinyl alcohol polymer having a degree of saponification of less than 60 mol%;

(13) The composition according to (12), wherein the amphipathic substance (B) includes, as the anion-modified vinyl alcohol polymer having a degree of saponification of less than 60 mol%, a carboxylic acid-modified vinyl alcohol polymer having a degree of saponification of less than 60 mol%;

(14) The composition according to any one of (1) to (13), wherein a content of the amphipathic substance (B) is 0.001% by mass or more and 30% by mass or less, with respect to the vinyl alcohol polymer (A);

(15) A dispersant for suspension polymerization including the composition according to any one of (1) to (14); and

(16) A method for producing a vinyl polymer, the method including: subjecting a vinyl compound to polymerization in the presence of a vinyl alcohol polymer (A) and an amphipathic substance (B), wherein the vinyl alcohol polymer (A) is a vinyl alcohol polymer including a carbonyl group and having a degree of saponification of 60 mol% or more, and the amphipathic substance (B) includes at least one selected from a group consisting of a vinyl alcohol polymer having a degree of saponification of less than 60 mol%, and a surfactant.

[Effects of the Invention]

The present invention is capable of providing: a composition containing a vinyl alcohol polymer and an amphipathic substance, the composition enabling polymer particles to be obtained, which have a small average particle diameter, accompanied by few coarse particles, and are favorable in plasticizer absorptivity, even in a case in which suspension polymerization is carried out at a high temperature; a dispersant for suspension polymerization including the composition; and a method for producing a vinyl polymer.

[DESCRIPTION OF EMBODIMENTS]

Composition

The composition of the present invention is a composition containing a vinyl alcohol polymer (A) and an amphipathic substance (B), in which the vinyl alcohol polymer (A) is a vinyl alcohol polymer including a carbonyl group and having a degree of saponification of 60 mol% or more, and the amphipathic substance (B) includes at least one selected from the group consisting of a vinyl alcohol polymer having a degree of saponification of less than 60 mol%, and a

surfactant.

Vinyl Alcohol Polymer (A)

The vinyl alcohol polymer (A) (hereinafter, may be also referred to as "PVA (A)") is a vinyl alcohol polymer including a carbonyl group and having a degree of saponification of 60 mol% or more. The PVA (A) may include PVA molecules not having a carbonyl group. In other words, the PVA (A) is a PVA (an assembly of PVA molecules) having a degree of saponification of 60 mol% or more as measured in accordance with a procedure described later, in which at least a part of the PVA molecules has a carbonyl group. It is preferred that the PVA (A) further has a formyl group and an alkenyl group. The PVA (A) may include PVA molecules not having at least one of a carbonyl group, a formyl group, and an alkenyl group. The PVA (A) may have the carbonyl group, the formyl group, and the alkenyl group in the same molecule or different molecules. In the case in which the PVA (A) has the carbonyl group, the formyl group, and the alkenyl group in the same molecule or in different molecules, in the PVA (A), it is not necessary that the carbonyl group, the formyl group, and the alkenyl group are all contained in one molecule. In other words, for example, the PVA (A) may be a mixture of: a PVA (a) which has two groups from the carbonyl group, the formyl group, and the alkenyl group; and a PVA (b) which has the one remaining group. In this case, both the PVA (a) and the PVA (b) may have one or more groups from the carbonyl group, the formyl group, and the alkenyl group. The PVA (A) may be a mixture of three or more types of PVAs. It is to be noted that the mode of the PVA having all of the carbonyl group, the formyl group, and the alkenyl group in one molecule; and the mode of the mixture consisting of multiple types of PVAs, this mixture having the carbonyl group, the formyl group, and the alkenyl group, have substantially the same properties, and further, typically, it is extremely difficult, in general, to discriminate between these two modes by an analysis or the like.

The PVA (A) is a polymer having a vinyl alcohol unit as a structural unit. The PVA (A) may be, for example, obtained by: subjecting a vinyl ester to polymerization in the presence of an unsaturated aliphatic aldehyde; and saponifying a vinyl ester polymer thus obtained. The lower limit of the degree of saponification of the PVA (A) is 60 mol%, preferably 65 mol%, and more preferably 70 mol%. On the other hand, the upper limit of the degree of saponification may be 100 mol%, and is preferably 95 mol%, more preferably 90 mol%, still more preferably 85 mol%, and yet more preferably 80 mol%. When the degree of saponification of the PVA (A) falls within the above range, owing to surface active performance becoming suitable and the like, various types of performance (enabling polymer particles to be obtained, etc., which have a small average particle diameter and are accompanied by few coarse particles, with favorable plasticizer absorptivity) can be improved in the case of being used as, for example, a dispersant for suspension polymerization. The degree of saponification is a value measured in accordance with a method described in JIS K6726: 1994.

The carbonyl group (-C (=O)-) contained in the PVA (A) is a divalent group in which two atomic bonds both bond to a carbon atom. The PVA (A) preferably has a structure represented by the following formula (1) including the carbonyl group.

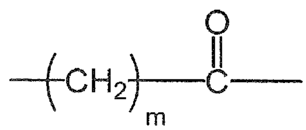

(1)

In the formula (1), m is an integer of 1 to 11. m is preferably an integer of 2 to 9, and may be preferably an integer of 3 to 7.

It is to be noted that in the present description, numerical value ranges described using "to" mean that numerical values before and after "to" are included as the lower limit value and the upper limit value, respectively.

A content of the carbonyl group with respect to a total content of the vinyl alcohol unit and the vinyl ester unit in the PVA (A) is preferably 0.01 mol% or more and 5 mol% or less, more preferably 0.03 mol% or more and 3 mol% or less, still more preferably 0.05 mol% or more and 2 mol% or less, yet more preferably 0.1 mol% or more and 1 mol% or less, and particularly preferably 0.15 mol% or more and 0.3 mol% or less. When the content of the carbonyl group in the PVA (A) falls within the above range, various types of performance in the case of being used as, for example, a dispersant for suspension polymerization and the like, can be improved. The content of the carbonyl group is defined as a value determined in accordance with a procedure disclosed in EXAMPLES, described later.

In the case of the PVA (A) including the formyl group, the formyl group is a monovalent group represented by -C(=O)H.

A content of the formyl group with respect to a total content of the vinyl alcohol unit and the vinyl ester unit in the PVA (A) is preferably 0.01 mol% or more and 5 mol% or less, more preferably 0.03 mol% or more and 3 mol% or less, still more preferably 0.05 mol% or more and 2 mol% or less, and yet more preferably 0.1 mol% or more and 1 mol% or less. The upper limit of the content of the formyl group may be 0.5 mol%, or may be 0.3 mol%. When the content of the formyl group in the PVA (A) falls within the above range, various types of performance in the case of being used as, for example, a

dispersant for suspension polymerization and the like, can be improved. The content of the formyl group is defined as a value determined in accordance with a procedure disclosed in EXAMPLES, described later.

In the case of the PVA (A) including the alkenyl group, the alkenyl group is a monovalent group derived from an alkene by removing one arbitrary hydrogen atom. The number of carbon atoms in the alkenyl group is preferably 2 to 13, more preferably 3 to 12, still more preferably 4 to 11, and may be yet more preferably 5 to 9. The alkenyl group may be linear or may have a branched structure, and is preferably linear. The alkenyl group is preferably positioned at an end of a polymer chain.

In the case of the PVA (A) including the alkenyl group, the alkenyl group preferably has, at an end (extremity) thereof, a carbon-carbon double bond. In other words, the PVA (A) preferably has, at an end (extremity) thereof, a vinyl group. The alkenyl group contained in the PVA (A) is more preferably a group represented by the following formula (5).

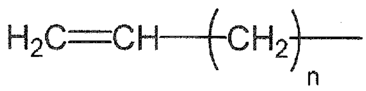

(5)

In the formula (5), n is an integer of 1 to 11. n is preferably an integer of 2 to 9, and may be more preferably an integer of 3 to 7.

A content of the alkenyl group with respect to a total content of the vinyl alcohol unit and the vinyl ester unit in the PVA (A) is preferably 0.01 mol% or more and 5 mol% or less, more preferably 0.03 mol% or more and 3 mol% or less, still more preferably 0.05 mol% or more and 1 mol% or less, and may be yet more preferably 0.1 mol% or more and 0.5 mol% or less. The upper limit of the content of the alkenyl group may be 0.3 mol%. When the content of the alkenyl group in the PVA (A) falls within the above range, various types of performance in the case of being used as, for example, a dispersant for suspension polymerization and the like, can be improved. The content of the alkenyl group is defined as a value determined in accordance with a procedure disclosed in EXAMPLES, described later. A range of the suitable content of the vinyl group with respect to the total content of the vinyl alcohol unit and the vinyl ester unit in the PVA (A) is the same as the range of the suitable content of the alkenyl group.

The PVA (A) preferably includes, at an end of a polymer chain, a group represented by the following formula (2).

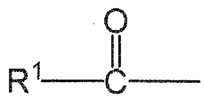

(2)

In the formula (2), $R^1$ represents an alkenyl group or an alkyl group.

In the case in which $R^1$ in the formula (2) represents an alkenyl group, the number of carbon atoms in the alkenyl group represented is preferably 2 to 13, more preferably 3 to 12, still more preferably 4 to 11, and may be yet more preferably 5 to 9. The alkenyl group may be linear or may have a branched structure, and is preferably linear. The alkenyl group is preferably a group having a methylene group at an end on the carbonyl group side (i.e., a group represented by ($R-CH_2-$ (wherein R represents an alkenyl group)), more preferably a group having a carbon-carbon double bond at an end (extremity) thereof, and still more preferably a group represented by the above formula (5). Of candidate groups represented by the formula (2), the group wherein $R^1$ represents the alkenyl group is typically formed in a case in which the unsaturated aliphatic aldehyde serves as a chain transfer agent.

The PVA (A) may have a carbon-carbon double bond in addition to the alkenyl group, and in particular, preferably has a structure represented by -CO-(CH=CH)p- (wherein p is an integer of 1 to 5). Such a structure is, for example, incorporated by means of a heat treatment, and the like, of a PVA having been obtained by polymerization of a vinyl ester in the presence of an unsaturated aliphatic aldehyde, followed by saponification.

In the case in which $R^1$ in the formula (2) represents the alkyl group, the alkyl group is a monovalent group represented by $-C_sH_{(2s+1)}$, wherein s is preferably an integer of 1 to 12.

In the case in which the PVA (A) includes the group wherein $R^1$ represents the alkyl group in the formula (2), a content of the group wherein $R^1$ represents the alkyl group in the formula (2), with respect to a total content of the vinyl alcohol unit and the vinyl ester unit in the PVA (A) is preferably 0.01 mol% or more and 5 mol% or less, more preferably 0.03 mol% or more and 3 mol% or less, still more preferably 0.05 mol% or more and 2 mol% or less, and yet more preferably 0.1 mol% or more and 1 mol% or less. When the content of the group wherein $R^1$ represents the alkyl group in the formula (2) falls within the above range in the PVA (A), various types of performance in the case of being used as, for example, a dispersant for suspension polymerization and the like, can be improved. The content of the group wherein $R^1$ represents the alkyl group in the formula (2) is defined as a value determined in accordance with a procedure disclosed in EXAMPLES, described later.

Among candidate groups represented by the formula (2), the group wherein $R^1$ represents the alkyl group is, for example, incorporated at the end of the polymer chain in the case in which the saturated aliphatic aldehyde serves as a

chain transfer agent, when the vinyl ester is subjected to polymerization in the presence of the saturated aliphatic aldehyde. The saturated aliphatic aldehyde is preferably acetaldehyde.

Furthermore, in the case in which the PVA (A) includes, at the end of a polymer chain, the group represented by the above formula (2), the PVA (A) may include both: the group wherein $R^1$ represents the alkenyl group in the formula (2); and the group wherein $R^1$ represents the alkyl group in the formula (2).

The PVA (A) preferably has a terminal group derived from an unsaturated aliphatic aldehyde, or a structural unit derived from an unsaturated aliphatic aldehyde. The number of carbon atoms of the unsaturated aliphatic aldehyde is preferably 3 to 14, more preferably 4 to 12, and may be still more preferably 6 to 10.

The unsaturated aliphatic aldehyde preferably has a carbon-carbon double bond, and more preferably has a carbon-carbon double bond at an end (extremity) thereof. More specifically, the unsaturated aliphatic aldehyde preferably contains a vinyl group. The unsaturated aliphatic aldehyde having the carbon-carbon double bond is preferably an alkenyl group having a methylene group at an end on the carbonyl group side, i.e., an unsaturated aliphatic aldehyde having a group represented by $R\text{-}CH_2\text{-}$ (wherein R represents an alkenyl group). In other words, the unsaturated aliphatic aldehyde is preferably an unsaturated aliphatic aldehyde other than $\alpha,\beta$-unsaturated aldehydes. When the unsaturated aliphatic aldehyde having a structure as described above is used, reactivity during polymerization can be improved, whereby a PVA in which a sufficient amount of a functional group (carbonyl group, etc.) has been incorporated can be effectively obtained.

The unsaturated aliphatic aldehyde is particularly preferably a compound represented by the following formula (6).

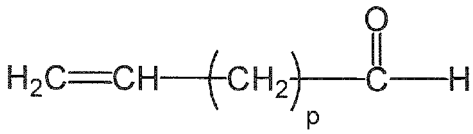

(6)

In the formula (6), p is an integer of 1 to 11. p is preferably an integer of 2 to 9, and may be more preferably an integer of 3 to 7.

Examples of the unsaturated aliphatic aldehyde include 2-propenal, 3-butenal, 4-pentenal, 5-hexenal, 3-methyl-5-hexanal, 6-heptenal, 6-octenal, 7-octenal, 7-methyl-7-octenal, 3,7-dimethyl-7-octenal, 8-nonenal, 9-decenal, 10-undecenal, 11-dodecenal, and the like.

The terminal group derived from the unsaturated aliphatic aldehyde which is preferably contained in the PVA (A) is exemplified by the group wherein $R^1$ represents the alkenyl group, among the candidate groups represented by the following formula (2).

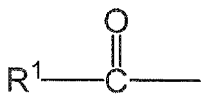

(2)

In this case, specific modes and suitable modes of the group (terminal group) represented by the above formula (2) are as described above. Among the candidate groups represented by the above formula (2), the group wherein $R^1$ represents the alkenyl group is incorporated at the end of the polymer chain in the case in which the unsaturated aliphatic aldehyde serves as a chain transfer agent, when the vinyl ester is subjected to polymerization in the presence of the unsaturated aliphatic aldehyde.

Examples of the structural unit derived from the unsaturated aliphatic aldehyde which is preferably contained in the PVA include a structural unit represented by the following formula (3) or (4).

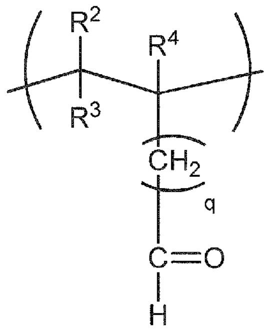

(3)

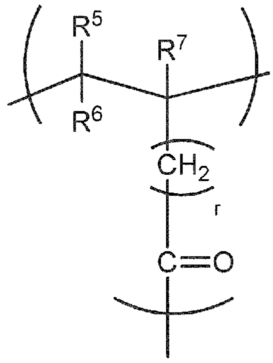

(4)

In the formulae (3) and (4), $R^2$ to $R^7$ each independently represent a hydrogen atom or an alkyl group having 1 to 3 carbon atoms; q is an integer of 1 to 11; and r is an integer of 1 to 11.

In the formula (3), $R^2$ to $R^4$ each represent preferably a hydrogen atom; and q is preferably an integer of 2 to 9 and may be more preferably an integer of 3 to 7. The structural unit represented by the formula (3) is typically formed in a case in which the unsaturated aliphatic aldehyde acts as monomer, whereby the structural unit is incorporated into the polymer chain.

In the formula (4), $R^5$ to $R^7$ each represent preferably a hydrogen atom; and r is preferably an integer of 2 to 9 and may be more preferably an integer of 3 to 7. The structural unit represented by formula (4) is typically formed in a case in which the formyl group in the structural unit represented by the above formula (3) further serves as a chain transfer agent.

The PVA (A) preferably has a tertiary carbon atom (a carbon atom directly attached to three carbon atoms). Furthermore, the PVA preferably has a structural unit containing a tertiary carbon atom. In such a case, i.e., in a case in which the PVA (A) has a branched structure, various types of performance in the case of being used as, for example, a dispersant for suspension polymerization and the like, can be improved. In the case in which, for example, the PVA (A) has the structural unit represented by the above formula (3) or (4) and each of $R^2$ to $R^7$ represents a hydrogen atom, the PVA (A) has a tertiary carbon atom.

The PVA (A) may have an other structural unit aside from structural units derived from a vinyl ester (a vinyl alcohol unit and a vinyl ester unit) and the structural unit derived from the unsaturated aliphatic aldehyde. Examples of a monomer that gives the other structural unit include: α-olefins such as ethylene, propylene, 1-butene, isobutene, and 1-hexene; acrylic acid and methacrylic acid; acrylic acid esters such as methyl acrylate and ethyl acrylate; methacrylic acid esters such as methyl methacrylate and ethyl methacrylate; acrylamide derivatives such as N-methylacrylamide, N-ethylacrylamide, and 2-acrylamide-2-methylpropanesulfonate; methacrylamide derivatives such as N-methylmethacrylamide and N-ethylmethacrylamide; maleic acid; maleic acid esters such as monomethyl maleate and dimethyl maleate; fumaric acid; fumaric acid esters such as monomethyl fumarate and dimethyl fumarate; itaconic acid; 3,4-diacetoxy-1-butene; vinyl ethers such as methyl vinyl ether, ethyl vinyl ether, n-propyl vinyl ether, isopropyl vinyl ether, and n-butyl vinyl ether; hydroxy group-containing vinyl ethers such as ethylene glycol vinyl ether, 1,3-propanediol vinyl ether, and 1,4-butanediol vinyl ether; allyl acetate; allyl ethers such as propyl allyl ether, butyl allyl ether, and hexyl allyl ether; monomers having an oxyalkylene group; isopropenyl acetate; hydroxy group-containing α-olefins such as 3-buten-1-ol, 4-penten-1-ol, 5-hexen-1-ol, 7-octen-1-ol, 9-decen-1-ol, and 3-methyl-3-buten-1-ol; monomers having a silyl group, such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamide propyltrimethoxysilane, and 3-(meth)acrylamide propyltriethoxysilane; and the like.

A proportion accounted for by the other structural unit in total structural units in the PVA (A) may be preferably 20 mol% or less, may be more preferably 10 mol% or less, and may be still more preferably 5 mol% or 1 mol%. On the other hand, the proportion accounted for by the other structural unit may be, for example, 0.1 mol% or more, or may be 1 mol% or more.

The lower limit of a viscosity-average degree of polymerization of the PVA (A) may be, for example, 100, and may be preferably 200, more preferably 300, still more preferably 400, and yet more preferably 500. Due to the viscosity-average degree of polymerization being equal to or more than the lower limit, a protective colloid property can increase, and various types of performance in the case of being used as, for example, a dispersant for suspension polymerization can be enhanced. On the other hand, the upper limit of the viscosity-average degree of polymerization is preferably 2,000, more preferably 1,500, still more preferably 1,000, and yet more preferably 800. When the viscosity-average degree of polymerization is equal to or less than the upper limit, the surface active performance can increase, and various types of performance in the case of being used as, for example, a dispersant for suspension polymerization can improve. The

viscosity-average degree of polymerization is a value measured based on JIS K6726: 1994. Specifically, the viscosity-average degree of polymerization can be determined by the following equation, using a limiting viscosity [η] (unit: L/g) measured in water at 30 °C on the PVA, having been re-saponified until the degree of saponification becomes 99.5 mol% or more and then purified:

$$\text{viscosity-average degree of polymerization} = ([\eta] \times 10^4 / 8.29)^{(1/0.62)}$$

The PVA (A) can be produced by, for example, a production method including: a step (Step A) of polymerizing a vinyl ester in the presence of an unsaturated aliphatic aldehyde and/or a saturated aliphatic aldehyde; and a step (Step B) of saponifying a vinyl ester polymer obtained.

In Step A, a vinyl ester is polymerized in the presence of an unsaturated aliphatic aldehyde and/or a saturated aliphatic aldehyde to give a vinyl ester polymer. A procedure of polymerizing the vinyl ester is exemplified by a well-known procedure such as bulk polymerization, solution polymerization, suspension polymerization, emulsion polymerization, and the like. Of these procedures, the bulk polymerization performed without a solvent and the solution polymerization performed with a solvent such as an alcohol or the like are preferred. The alcohol is preferably an alcohol having 3 or fewer carbon atoms; more preferably methanol, ethanol, n-propanol, or isopropanol; and still more preferably methanol. In carrying out a polymerization reaction by these procedures, either of a batchwise system or a continuous system can be employed as a reaction system. A polymerization temperature at a time of conducting the polymerization reaction is not particularly limited, and a range of 5 °C or more and 200 °C or less is appropriate.

Examples of the vinyl ester include vinyl formate, vinyl acetate, vinyl propionate, vinyl valerate, vinyl caprate, vinyl laurate, vinyl stearate, vinyl benzoate, vinyl pivalate, vinyl versatate, and the like. Of these, vinyl acetate is preferred.

Examples of a polymerization initiator to be used in the polymerization reaction include well-known polymerization initiators, e.g., azo initiators such as 2,2'-azobisisobutyronitrile, 2,2'azobis(2,4-dimethylvaleronitrile), and 2,2'azobis(4-methoxy-2,4-dimethylvaleronitrile); organic peroxide initiators such as benzoyl peroxide, n-propyl peroxycarbonate, and diisopropyl peroxydicarbonate; and the like. A usage amount of the polymerization initiator is, for example, preferably 0.01 to 5% by mass with respect to the vinyl ester to be used.

Specific examples and suitable examples of the unsaturated aliphatic aldehyde are as described above. Examples of the saturated aliphatic aldehyde acetaldehyde, propionaldehyde, butylaldehyde, 1-pentanal, 1-hexanal, 1-octanal, 1-nonanal, 1-decanal, and the like, and acetaldehyde is preferred. One, or two or more types of the unsaturated aliphatic aldehyde and the saturated aliphatic aldehyde may be used. A usage amount of the unsaturated aliphatic aldehyde and the saturated aliphatic aldehyde is, for example, preferably 0.01 to 10% by mass with respect to the vinyl ester. At the time of polymerizing the vinyl ester, an other chain transfer agent aside from the unsaturated aliphatic aldehyde and the saturated aliphatic aldehyde, or the like may also be present. Examples of the other chain transfer agent include: ketones such as acetone and methyl ethyl ketone; mercaptans such as 2-hydroxyethanethiol and 3-mercaptopropionic acid; thiocarboxylic acids such as thioacetic acid; halogenated hydrocarbons such as trichloroethylene and perchloroethylene; and the like.

At the time of polymerizing the vinyl ester, a copolymerizable monomer can be further copolymerized within a range not leading to impairment of the principles of the present invention. Such a copolymerizable monomer may be exemplified by those described above as the monomer that gives the other structural unit.

In the Step B, the vinyl ester polymer obtained in Step A is saponified, for example, in an alcohol solution using an alkali catalyst or an acid catalyst to give the PVA. For the saponification reaction of the vinyl ester polymer, an alcoholysis reaction or a hydrolysis reaction may be adopted, each using: a conventionally well-known basic catalyst such as sodium hydroxide, potassium hydroxide, or sodium methoxide; or a conventionally well-known acidic catalyst such as p-toluenesulfonate. Examples of the solvent to be used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. These may be used either alone of one type, or in a combination of two or more types thereof. Of these, due to convenience, it is preferable to use methanol or a mixed solution of methanol and methyl acetate as the solvent, and to conduct the saponification reaction in the presence of sodium hydroxide which serves as the basic catalyst. The saponifying can be conducted using a belt type reactor, a kneader type reactor, a tower type reactor, or the like.

By way of Step B, a resin solid containing the PVA is obtained. The process for producing a vinyl alcohol polymer may further include, as step(s) after Step B: a step of washing the resin solid containing the PVA; a step of drying the resin solid containing the PVA; a step of subjecting the resin solid containing the PVA to a heat treatment; and/or the like.

Amphipathic Substance (B)

The amphipathic substance (B) contained in the composition of the present invention includes at least one

selected from the group consisting of a vinyl alcohol polymer having a degree of saponification of less than 60 mol%, and a surfactant. In this regard, the amphipathic substance means a substance (a polymer, a compound, etc.) having a hydrophilic group and a hydrophobic group in the same molecule. The amphipathic substance (B) is preferably at least one selected from the group consisting of a vinyl alcohol polymer having a degree of saponification of less than 60 mol%, and a surfactant.

As described above, when the PVA is to be used as a dispersant for suspension polymerization in suspension polymerization, an operation generally referred to as "hot charging" may be conducted in which an aqueous solution of the PVA is charged into a solution for polymerization having a high temperature of 60 °C or more. Aggregation of the PVA may occur when the hot charging is conducted using an aqueous solution containing a conventional dispersant for suspension polymerization, and as a result, coarse polymer particles may be obtained. Although a mechanism that causes aggregation of the PVA is not certain, it is presumed that when an aqueous solution containing a PVA having been affinitized to water molecules by an electrostatic interaction and/or hydrogen bond is instantly mixed with a solution having a high temperature and polarity that differs from the polarity of the aqueous PVA solution, the affinity balance may be disturbed to cause aggregation of the PVA. In addition, the function of the PVA as a dispersant tends to be inferior under high-temperature conditions of 60 °C or more, in suspension polymerization conducted using a conventional PVA as a dispersant, thereby leading to a demand for a dispersant that is stable even under high-temperature conditions of 60 °C or more. The present inventors found that by combining the PVA (A) with the amphipathic substance (B), aggregation of the PVA (A) can be inhibited when hot charging of an aqueous solution of the PVA (A) is conducted, and even in a case in which suspension polymerization is carried out at a high temperature of 60 °C or more, obtaining polymer particles having a small average particle diameter, accompanied by few coarse particles is enabled, with favorable plasticizer absorptivity. Although a mechanism that results in such effects is not certain, it is presumed that the amphipathic substance (B) inhibits abrupt disruption of affinity balance among substances, and colloid particles are stabilized, whereby aggregation of the PVA (A) is inhibited in consequence.

A content of the amphipathic substance (B) in the composition of the present invention, with respect to the PVA (A) (100% by mass), is preferably 0.001% by mass or more and 30% by mass or less, more preferably 0.01% by mass or more and 20% by mass or less, still more preferably 0.1% by mass or more and 10% by mass or less, and yet more preferably 1.0% by mass or more and 5.0% by mass or less. Furthermore, in a case in which the amphipathic substance (B) includes a plurality of compounds, a total of contents of the compounds preferably falls within the above range. When the content of the amphipathic substance (B) falls within the above range, the effect of inhibiting aggregation of PVA (A) molecules per se may improve, and stability of the suspension polymerization may be more superior.

The surfactant is preferably an anionic surfactant and a nonionic surfactant, and more preferably an anionic surfactant. One type of the surfactant may be used alone, or two or more types thereof man be used in a combination.

The anionic surfactant is exemplified by alkylsulfuric acid salts, alkylsulfonic acid salts, alkylbenzenesulfonic acid salts, polyoxyalkylenealkyl ether sulfuric acid salts (alkyl ether sulfuric acid salts), polyoxyalkylenealkyl ether carboxylic acid salts (alkyl ether acetic acid salts), α-olefinsulfonic acid salts, phosphoric acid ester salts, acyl amino acid salts, acyl taurine salts, acyl lactic acid salts, soap (higher aliphatic acids), alkyl sulfosuccinic acid salts, acyl hydrolyzed collagen salts, acyl isethionic acid salts, and the like. Acyl amino acid salts and acyl taurine salts are preferred, and acyl amino acid salts are more preferred. The anionic surfactant is preferably a metal salt, more preferably an alkali metal salt, and still more preferably a sodium salt. Examples of the acyl amino acid salt include sodium lauroyl sarcosinate, sodium lauroyl methylaminopropionate, sodium cocoyl glutamate, potassium cocoyl glycinate, and the like, and sodium lauroyl sarcosinate is preferred. Examples of the acyl taurine salt include sodium lauroyl taurate, and the like. One type of the anionic surfactant may be used alone, or two or more types thereof may be used in a combination.

Examples of the nonionic surfactant include polyoxyethylene lauryl ether, oleyl ether, octyl phenyl ether, nonyl phenyl ether, polyoxyethylene monostearate, palmitate, oleate, and the like. One type of the nonionic surfactant may be used alone, or two or more types thereof man be used in a combination.

The vinyl alcohol polymer having a degree of saponification of less than 60 mol% is preferably a vinyl alcohol polymer having a degree of saponification of 40 mol% or less. The lower limit of the degree of saponification of the vinyl alcohol polymer having a degree of saponification of less than 60 mol% is preferably 10 mol%, more preferably 20 mol%, and still more preferably 30 mol%.

The vinyl alcohol polymer having a degree of saponification of less than 60 mol% is preferably an anion-modified vinyl alcohol polymer. The anion-modified vinyl alcohol polymer is exemplified by carboxylic acid-modified vinyl alcohol polymers, phosphonic acid-modified vinyl alcohol polymers, and the like, and a carboxylic acid-modified vinyl alcohol polymer is more preferred. The carboxyl group included in the carboxylic acid-modified vinyl alcohol polymer may be in a state of a salt.

The viscosity-average degree of polymerization of the vinyl alcohol polymer having a degree of saponification of less than 60 mol% is, for example, 50 or more and 500 or less, and more preferably 100 or more and 300 or less. When the viscosity-average degree of polymerization of the vinyl alcohol polymer having a degree of saponification of less than 60 mol% falls within the above range, the composition of the present invention may have improved various performance in the

case of being used as a dispersant for suspension polymerization.

In the amphipathic substance (B), a mass ratio (hydrophobic group: hydrophilic group) of its hydrophobic group and its hydrophilic group is preferably 4:1 or more and 1:4 or less.

The composition of the present invention may further contain other component(s) aside from the PVA (A) and the amphipathic substance (B). The other component is exemplified by a solvent such as water and an alcohol, a resin other than the PVA (A) and the amphipathic substance (B), an additive such as a surfactant and a plasticizer, each compound used in production, and the like. The composition of the present invention may be in the form of a solution such as an aqueous solution, or may be in the form of powder or the like. The lower limit of a total amount of the PVA (A) and the amphipathic substance (B) in the nonvolatile matter in the composition of the present invention is preferably 30% by mass, and more preferably 50% by mass, or may be still more preferably 70% by mass, 90% by mass, or 99% by mass. The upper limit of the total amount of the PVA (A) and the amphipathic substance (B) in the nonvolatile matter in the composition of the present invention may be 100% by mass. The nonvolatile matter as referred to means components other than the solvent.

The composition of the present invention can be used in various intended usages similar to, for example, conventionally well-known PVAs, such as materials of films and fibers, additives for paper processing and fiber processing, adhesives, dispersion aids and dispersants for emulsion polymerization and suspension polymerization, and binders of inorganic substance. Of these, as described later, the composition can be particularly suitably used as a dispersant for suspension polymerization of a vinyl compound or the like.

Dispersant for Suspension Polymerization

The dispersant for suspension polymerization of the present invention (hereinafter, may be also referred to as the "dispersant") includes the composition of the present invention, described above. The dispersant as referred to means an additive used, in suspension polymerization for use in: enhancing monomer dispersibility; controlling particle diameters of polymer particles to be obtained; and the like. The total amount of the PVA (A) and the amphipathic substance (B) in the nonvolatile matter of the dispersant of the present invention is preferably 30% by mass, and more preferably 50% by mass, or may be still more preferably 70% by mass, 90% by mass, or 99% by mass. The upper limit of the total amount of the PVA (A) and the amphipathic substance (B) in the nonvolatile matter of the dispersant of the present invention may be 100% by mass. The nonvolatile matter, aside from the PVA (A) and the amphipathic substance (B), which may be included in the dispersant of the present invention is exemplified by a resin other than the PVA (A) and the amphipathic substance (B), an additive such as a surfactant and a plasticizer, each compound used in production, and the like. In one embodiment of the present invention, a content of the volatile matter in the dispersant may be 20% by mass or less, may be 15% by mass or less, or may be 10% by mass or less. The volatile matter which can be included in the dispersant of the present invention is exemplified by alcohols, water, and the like. In other words, the dispersant of the present invention may substantially consist of the PVA (A) and the amphipathic substance (B). The form of the dispersant of the present invention is not particularly limited, and may be powder. The dispersant of the present invention may be a solution such as an aqueous solution. In the case in which the dispersant of the present invention is a solution, a content of the volatile matter in the dispersant may be, for example, 50% by mass or more and 99.9% by mass.

One embodiment of the dispersant of the present invention may be a dispersant for suspension polymerization in which the PVA (A) and the amphipathic substance (B) are used in a combination. A production method of the dispersant including a step of mixing the PVA (A) and the amphipathic substance (B), and the dispersant obtained by mixing the PVA (A) and the amphipathic substance (B) are also involved in embodiments of the present invention. Also in the dispersant of these embodiments, other component(s) aside from the PVA (A) and the amphipathic substance (B) may be further contained.

The dispersant of the present invention is suitable as a dispersant for suspension polymerization of a vinyl compound. By using the dispersant of the present invention, stability in polymerization under high-temperature conditions can be enhanced, and polymer particles having a small average particle diameter, accompanied by few coarse particles can be efficiently obtained. Furthermore, the polymer particles to be obtained by suspension polymerization using the dispersant of the present invention are also favorable in plasticizer absorptivity.

Method for Producing Vinyl Polymer

The method for producing a vinyl polymer of the present invention includes a step of subjecting a vinyl compound to polymerization in the presence of the PVA (A) and the amphipathic substance (B). The method for producing a vinyl polymer is similar to a well-known method for producing a vinyl polymer, except that the PVA (A) and the amphipathic substance (B) are used as the dispersant.

In the method for producing a vinyl polymer of the present invention, typically, the vinyl compound is subjected to suspension polymerization in an aqueous medium. As the aqueous medium, as well as pure water, an aqueous solution containing various types of additive components, or an aqueous medium containing another organic solvent may be used.

The method for producing a vinyl polymer of the present invention may include a step of adding the PVA (A) and the amphipathic substance (B) into the aqueous medium.

When suspension polymerization of the vinyl compound is carried out, the amount of the PVA (A) to be added is not particularly limited, and with respect to the vinyl compound on a mass basis, is preferably 100 ppm or more and 50,000 ppm or less, and more preferably 200 ppm or more and 20,000 ppm or less, or may be still more preferably 10,000 ppm or less, 5,000 ppm or less or 2,000 ppm or less.

When the suspension polymerization of the vinyl compound is carried out, the amount of addition of the amphipathic substance (B) is not particularly limited, and for example, depending on the preferred amount of addition of the PVA (A) described above, the amount of addition of the amphipathic substance (B), with respect to the PVA (A), is preferably 0.001% by mass or more and 30% by mass or less, more preferably 0.01% by mass or more and 20% by mass or less, still more preferably 0.1% by mass or more and 10% by mass or less, and yet more preferably 1.0% by mass or more and 5.0% by mass or less. When the content of the amphipathic substance (B) falls within the above range, the effect of inhibiting aggregation of PVA (A) molecules per se may improve, and stability of the suspension polymerization may be more superior.

The PVA (A) and the amphipathic substance (B) mixed beforehand may be subjected to the suspension polymerization system of the vinyl compound, or the PVA (A) and the amphipathic substance (B) may be each subjected thereto.

The PVA (A) and the amphipathic substance (B) may be each treated as, for example, a powdery matter, or may be treated as a solution through mixing with a medium as a such as water. More specifically, in the case of mixing the PVA (A) and the amphipathic substance (B), for example: a powdery matter may be provided through mixing a powdery PVA (A) and a powdery amphipathic substance (B); a solution may be provided through mixing a solution of the PVA (A) and a solution of the amphipathic substance (B); a solution may be provided through placing a powdery amphipathic substance (B) into a solution of the PVA (A); or the powdery matter(s) and/or the solution(s) may be charged in a polymerization bath or the like. The powder or solution of the PVA (A), and the powder or solution of the amphipathic substance (B) may be each charged separately in a polymerization bath or the like.

The PVA (A) and the amphipathic substance (B) may be the dispersant of the present invention. The dispersant of the present invention may be used alone, or may be used in combination with an other dispersant and/or the like.

As a polymerization initiator to be used in the method for producing a vinyl polymer of the present invention, a polymerization initiator which is conventionally used in polymerization of a vinyl compound may be used; and specifically, a polymerization initiator similar to those exemplified in relation to the polymerization of the vinyl ester monomer described above may be used.

In the method for producing a vinyl polymer of the present invention, other various other types of additives may be added to the polymerization system as necessary. Examples of the additives include: polymerization modifiers such as aldehydes, halogenated hydrocarbons, and mercaptans; polymerization inhibitors such as phenol compounds, sulfur compounds, and N-oxide compounds; and the like. Furthermore, a pH adjusting agent, a scale inhibitor, a cross-linking agent, and/or the like may also be added. A plurality of the above-mentioned additives may be used in combination.

Examples of the vinyl compound which can be subjected to the suspension polymerization in the method for producing a vinyl polymer of the present invention include: halogenated vinyls such as vinyl chloride; vinyl esters such as vinyl acetate and vinyl propionate; acrylic acid, methacrylic acid, and esters and salts thereof; maleic acid, fumaric acid, and esters and anhydrides thereof; styrene; acrylonitrile; vinylidene chloride; vinyl ether; and the like. Of these vinyl compounds, vinyl chloride is preferred. The method for producing a vinyl polymer of the present invention is particularly suitably used in suspension polymerization of vinyl chloride alone, or suspension polymerization of vinyl chloride and a monomer copolymerizable with vinyl chloride. Examples of the monomer copolymerizable with vinyl chloride include: vinyl esters such as vinyl acetate and vinyl propionate; (meth)acrylic acid esters such as methyl (meth)acrylate and ethyl (meth) acrylate; $\alpha$-olefins such as ethylene and propylene; unsaturated dicarboxylic acids such as maleic anhydride and itaconic acid; acrylonitrile; styrene; vinylidene chloride; vinyl ether; and the like.

When the suspension polymerization of the vinyl compound is carried out in the method for producing a vinyl polymer of the present invention, a charging proportion of each component, a polymerization temperature, a polymerization time period, and the like may be similar to conditions that have been conventionally adopted in suspension polymerization of a vinyl compound such as vinyl chloride. It is to be noted that the method for producing a vinyl polymer of the present invention can be suitably adopted also to suspension polymerization at high temperatures, with the polymerization temperature of 60 °C or more (for example, 60 °C or more and 80 °C or less); however, the polymerization temperature may be less than 60 °C. The polymerization temperature may be, for example, 30 °C or more and 80 °C or less, may be 40 °C or more and 75 °C or less, or may be 50 °C or more and 70 °C or less. Furthermore, there is no limitation on a charging order and a ratio of the vinyl compound, the polymerization initiator, the dispersant, the aqueous medium, and the other additives.

In accordance with the method for producing a vinyl polymer of the present invention, stability in polymerization can be enhanced even in the case of a polymerization temperature being high, and polymer particles having a small

average particle diameter, accompanied by few coarse particles can be efficiently obtained. Furthermore, the vinyl polymer particles to be obtained by the method for producing a vinyl polymer of the present invention are also favorable in plasticizer absorptivity.

[EXAMPLES]

Hereinafter, the present invention is explained in more detail by way of Examples, but the present invention is not in any way limited to these Examples. It is to be noted that each measurement method adopted in the following Examples and Comparative Examples is indicated below.

Viscosity-Average Degree of Polymerization of PVA

The viscosity-average degree of polymerization of the PVA was measured based on JIS K6726: 1994. Specifically, in a case in which the degree of saponification of the PVA was less than 99.5 mol%, the viscosity-average degree of polymerization was determined by the following equation, using a limiting viscosity [η] (L/g) measured in water at 30 °C on the PVA, which had been obtained upon being saponified until the degree of saponification became 99.5 mol% or more:

$$\text{viscosity-average degree of polymerization} = ([\eta] \times 10^4 / 8.29)^{(1/0.62)}$$

Degree of Saponification of PVA

The degree of saponification of each PVA was determined by a method described in JIS K6726: 1994.

Content of Carbonyl Group in PVA

The content of the carbonyl group in the PVA was calculated by carrying out a $^1$H-NMR measurement. Each sample was subjected to Soxhlet washing with methyl acetate for 10 hrs, subjected to vacuum drying at 40 °C for 16 hrs to remove impurities, and then provided for the measurement. Using the sample prepared as a 1% by mass DMSO-$d_6$ solution (containing 0.03% by mass tetramethylsilane as an internal standard), the measurement was conducted at 400 MHz (80 °C, cumulative times: 256). Of the methine groups of the main chain of the PVA, CH linked to an OH group exhibits a peak at 3.8 to 4.0 ppm (integrated value [M]), and CH linked to an OAc group exhibits a peak at 4.2 to 4.6 ppm (integrated value [N]). Furthermore, a methyl group adjacent to a carbonyl group is assigned to 2.08 to 2.22 ppm (integrated value[O]), and a methylene group that is not adjacent to a methine group linked to an OH group or an OAc group and is adjacent to a formyl group or a carbonyl group is assigned to 2.3 to 2.5 ppm (integrated value [P]). Moreover, a peak of protons constituting formyl groups appears at 9.5 to 10.0 ppm (integrated value [Q]). The content of the carbonyl group in the PVA was determined by using the following equation, as a value with respect to the structural units (the vinyl alcohol unit and the vinyl ester unit) derived from the vinyl alcohol monomer.

$$\text{content of carbonyl group (mol\%)} = [([O]/3 + [P]/2 - [Q]) / ([M] + [N])] \times 100$$

Content of Alkenyl Group in PVA

The content of the alkenyl group (the vinyl group) in the PVA was calculated by carrying out a $^1$H-NMR measurement. Each sample was subjected to Soxhlet washing with methyl acetate for 10 hrs, subjected to vacuum drying at 40 °C for 16 hrs to remove impurities, and then provided for the measurement. Using the sample prepared as a 1% by mass DMSO-$d_6$ solution (containing 0.03% by mass tetramethylsilane as an internal standard), the measurement was conducted at 400 MHz (80 °C, cumulative times: 256). Of the methine groups of the main chain of the PVA, CH linked to an OH group exhibits a peak at 3.8 to 4.0 ppm (integrated value [M]), and CH linked to an OAc group exhibits a peak at 4.2 to 4.6 ppm (integrated value [N]). Furthermore, a peak of a proton derived from the alkenyl group (the vinyl group) is assigned to 5.7 to 6.0 ppm (integrated value [R]). The content of the alkenyl group in the PVA was determined by using the following equation, as a value with respect to the structural units (the vinyl alcohol unit and the vinyl ester unit) derived from the vinyl alcohol monomer.

$$\text{content of alkenyl group (mol\%)} = \{[R] / ([M] + [N]) \times 100$$

Content of Formyl Group in PVA

The content of the formyl group in the PVA was calculated by carrying out a $^1$H-NMR measurement. Each sample was subjected to Soxhlet washing with methyl acetate for 10 hrs, subjected to vacuum drying at 40 °C for 16 hrs to remove impurities, and then provided for the measurement. Using the sample prepared as a 1% by mass DMSO-$d_6$ solution (containing 0.03% by mass tetramethylsilane as an internal standard), the measurement was conducted at 400 MHz (80 °C, cumulative times: 256). Of the methine groups of the main chain of the PVA, CH linked to an OH group exhibits a peak at 3.8 to 4.0 ppm (integrated value [M]), and CH linked to an OAc group exhibits a peak at 4.2 to 4.6 ppm (integrated value [N]). Furthermore, a peak of a proton derived from the formyl group is assigned to 9.5 to 10.0 ppm (integrated value [Q]). The content of the formyl group in the PVA was determined by using the following equation, as a value with respect to the structural units (the vinyl alcohol unit and the vinyl ester unit) derived from the vinyl alcohol monomer.

$$\text{content of formyl group (mol\%)} = \{[Q] / ([M] + [N])\} \times 100$$

Content in PVA, of Group wherein $R^1$ Represents Alkyl Group in Formula (2)

The content in the PVA, of the group wherein $R^1$ represents the alkyl group in the formula (2) was calculated by carrying out a $^1$H-NMR measurement. Each sample was subjected to Soxhlet washing with methyl acetate for 10 hrs, subjected to vacuum drying at 40 °C for 16 hrs to remove impurities, and then provided for the measurement. Using the sample prepared as a 1% by mass DMSO-$d_6$ solution (containing 0.03% by mass tetramethylsilane as an internal standard), the measurement was conducted at 400 MHz (80 °C, cumulative times: 256). Of the methine groups of the main chain of the PVA, CH linked to an OH group exhibits a peak at 3.8 to 4.0 ppm (integrated value [M]), and CH linked to an OAc group exhibits a peak at 4.2 to 4.6 ppm (integrated value [N]). A peak of a proton of the methyl group derived from the alkyl group in the formula (2) is assigned to 2.08 to 2.22 ppm (integrated value[T]) or 0.7 to 1.0 ppm (integrated value[S]). The content of the alkyl group was determined by using the following equation, as a value with respect to the structural units (the vinyl alcohol unit and the vinyl ester unit) derived from the vinyl alcohol monomer. The content of the alkyl group is equivalent to the content in the PVA, of the group wherein $R^1$ represents the alkyl group in the formula (2).

$$\text{content of the alkyl group (mol\%)} = \{([T] / 3 + [S] / 3) / ([M] + [N])\} \times 100$$

· Production of PVA (A)

Production Example 1: Production of PVA-1

Into a reaction vessel equipped with a stirrer, a reflux condenser, a nitrogen inlet tube, and an addition port for a polymerization initiator were charged 1,600 parts by mass of vinyl acetate and 17.5 parts by mass of 7-octenal and 15 parts by mass of acetaldehyde, and replacement with nitrogen in the system was carried out for 30 min while bubbling nitrogen. Elevation of the temperature of the reaction vessel was started, and 1.5 parts by mass of 2,2'-azobisisobutyronitrile (AIBN) were added to initiate the polymerization when an internal temperature of 60 °C was attained. After conducting the polymerization at 60 °C for 3 hrs, cooling was performed to stop the polymerization. A solid content concentration at the time of stopping the polymerization was 43.6% by mass, and a conversion (rate of polymerization) was 45%. Subsequently, unreacted monomer was eliminated while adding methanol at 30 °C under reduced pressure at intervals to give a methanol solution of a vinyl ester polymer (concentration: 38.2%). Next, to 58.0 parts by mass of a methanol solution of the vinyl ester polymer (34 parts by mass of the polymer in the solution) prepared by further adding methanol to this methanol solution were added 1.78 parts by mass of a 10% by mass methanol solution of sodium hydroxide, 0.88 parts by mass of ion exchanged water, and 10 parts by mass of methyl acetate, and saponification was conducted at 40 °C (a concentration of the polymer in the saponification solution: 30% by mass, a moisture percentage of the saponification solution: 1% by mass, and a molar ratio of sodium hydroxide to the vinyl acetate unit in the polymer: 0.0128). Since gelatinous matter was produced about 15 min after the methanol solution of sodium hydroxide was added, the gelatinous matter was ground with a grinder, and the mixture was left to stand at 40 °C for 1 hour to allow saponification to proceed. Subsequently, 160 parts by mass of methyl acetate and 40 parts by mass of methanol were added thereto and the mixture was left to stand at 40 °C for 30 min to permit washing. After this operation for washing was repeated twice, a white solid obtained by deliquoring was vacuum-dried at 40 °C for 16 hrs, whereby PVA-1 was obtained as the PVA. Physical properties of the PVA-1 are shown in Table 3.

Production Examples 2 to 4: Production of PVA-2 to -4

As PVA (A), PVA-2 to 4 were each produced by a procedure similar to that of Production Example 1, except that changes were carried out such that the type and the usage amount of the aldehyde used in the polymerization, the usage amount of AIBN used in the polymerization, and the molar ratio (NaOH molar ratio) of sodium hydroxide to the vinyl acetate unit in the saponification were as shown in Table 1. Physical properties of the PVA-2 to 4 are shown in Table 3.

· Production of Amphipathic Substance (B) (PVA-5, -6)

Production Example 5: PVA-5

Into a 3-L reaction chamber equipped with a stirrer, a nitrogen feed port, an additive addition port, and an initiator addition port were charged 1,120 parts by mass of vinyl acetate and 480 parts by mass of methanol, and after the temperature was raised to 60 °C, replacement with nitrogen gas in the system was carried out by nitrogen bubbling for 30 min. As a chain transfer agent, 3-mercaptopropionic acid (hereinafter, abbreviated to 3-MPA) was dissolved in methanol to prepare a 50% solution, and nitrogen gas was bubbled to conduct nitrogen replacement. After the internal temperature of the reaction chamber was adjusted to 60 °C and 0.5 parts by mass of 3-MPA were added thereto, polymerization was started by adding 1.2 parts by mass of 2,2'-azobis(4-methoxy-2,4-dimethylvaleronitrile). During the polymerization, the polymerization temperature of 60 °C was maintained, and the 50% solution of 3-MPA in in methanol was continuous added at 4 mL/hour such that 3-MPA accounted for 5 parts by mass in the entire system. Four hours later, when the conversion (rate of polymerization) reached 40%, the polymerization was stopped by cooling. Then, unreacted vinyl acetate was eliminated under a reduced pressure, whereby a solution of modified polyvinyl acetate (modified PVAc) in methanol was obtained. To a modified PVAc solution adjusted to have a concentration of the modified PVAc being 27% by mass was added a NaOH solution in methanol (10% concentration) such that an alkali molar ratio (the number of moles of NaOH/ the number of moles of the vinyl ester unit in the modified PVAc) became 0.0042 to execute saponification. The moisture content of the saponification solution was adjusted to 1% by mass. The foregoing operation gave, as the amphipathic substance (B), a polyvinyl alcohol polymer, PVA-5, having a viscosity-average degree of polymerization being 140 and a degree of saponification being 40 mol%, and including, at an end, a carboxyl group as the ionic group. It is to be noted that the measurement of the degree of polymerization of PVA-5, and the verification of the presence/absence of the carboxyl group at the end were performed as in the following. The solution in methanol of the modified PVAc before subjecting to the saponification reaction, which had been obtained previously, from which unreacted vinyl acetate was eliminated, was charged into n-hexane to allow for precipitation of the modified PVAc, and the modified PVAc recovered was dissolved in acetone. This procedure of purification by reprecipitation was conducted three times, followed by drying under reduced pressure at 60 °C, whereby a purified product of the modified PVAc was obtained. After a solution in methanol of the purified product of the modified PVAc was subjected to saponification at the alkali molar ratio of 0.2, Soxhlet extraction with methanol was performed for 3 days, and then drying gave the purified product of the modified PVA. The viscosity-average degree of polymerization of the modified PVA was 140 when measured by a common method in accordance with JIS K6726: 1994. This modified PVA was dissolved in heavy water and then subjected to a nuclear magnetic resonance analysis, whereby a carboxyl group (COONa group) being present at one end in the molecule was ascertained.

Production Example 6: Production of PVA-6

As the amphipathic substance (B), a polyvinyl alcohol polymer, PVA-6, having a viscosity-average degree of polymerization of 200 and a degree of saponification of 50 mol% was produced by a procedure similar to that of Production Example 5, except that changes were carried out such that: the chain transfer agent was not used in the polymerization; and the usage amount of vinyl acetate, methanol, and AIBN, and the conversion, as well as the concentration of the vinyl ester polymer (modified PVAc) in the saponification, and the molar ratio (NaOH molar ratio) of sodium hydroxide to the vinyl acetate unit in the saponification were as shown in Table 2. Physical properties of the PVA-2 to -4 are shown in Table 2.

Example 1

A 4% by mass aqueous solution of PVA-1, and a 30% by mass aqueous solution of sodium lauroyl sarcosinate (manufactured by Kawaken Fine Chemicals Co., Ltd., "SOYPON (registered trademark) SLP") as the amphipathic substance (B) were mixed under a condition of 25 °C, at a mass ratio of 750:1 to give an aqueous solution, being the composition, having a content of sodium lauroyl sarcosinate with respect to PVA-1 (100% by mass) being 1% by mass.

Examples 2 to 10, Comparative Examples 1 to 3

Compositions (aqueous solutions) of Examples 2 to 10 and Comparative Examples 1 to 3 were each obtained by a procedure similar to that of Example 1, except that changes were carried out such that: the type of PVA (A) used, and the type and the amount of the amphipathic substance (B) were as shown in Table 3.

Evaluations

Suspension polymerization of vinyl chloride was carried out by the following method by using each composition obtained in Examples 1 to 10 and Comparative Examples 1 to 3 as a dispersant for suspension polymerization. Next, particles of the vinyl chloride polymer obtained were evaluated on the average particle diameter, the amount of coarse particles, and the plasticizer absorptivity. The evaluation results are shown in Table 3.

Suspension Polymerization of Vinyl Chloride

From each composition (aqueous solution) obtained in Examples and Comparative Examples, an aliquot in an amount of 1,000 ppm in terms of the solid content of the composition with respect to vinyl chloride described later was taken, and each solution thus provided was diluted by adding deionized water thereto, whereby an aqueous dispersant liquid was obtained. Next, 100 parts by mass of the aqueous dispersant liquid were charged into an autoclave having a volume of 5 L. Next, deionized water was added such that a total of deionized water was 1,300 parts by mass. Subsequently, 1.07 parts by mass of a 70% by mass toluene solution of di-2-ethylhexyl peroxydicarbonate were charged into the autoclave. Degassing was performed to remove oxygen such that pressure inside the autoclave was 0.0067 MPa. Thereafter, 800 parts by mass of vinyl chloride were charged thereinto, and a temperature of the contents inside the autoclave was raised to 65 °C to start polymerization with stirring. At the time of starting the polymerization, the pressure inside the autoclave was 1.02 MPa. The polymerization was terminated when 2.5 hrs had passed from the start of the polymerization and the pressure inside the autoclave had reached 0.70 MPa, and unreacted vinyl chloride was removed. Subsequently, a polymerization slurry was taken out and drying was performed at 65 °C for 17 hrs to give vinyl chloride polymer particles.

(1) Average particle diameter of vinyl chloride polymer particles

A particle diameter distribution of the vinyl chloride polymer particles obtained was measured by a dry sieve analysis using a wire mesh with a Tyler mesh standard. Results thereof were plotted in accordance with the Rosin-Rammler distribution equation, and an average particle diameter ($d_{p50}$; median diameter) was calculated.

(2) Amount of coarse particles of vinyl chloride polymer particles

A content of the vinyl chloride polymer particles obtained, which did not pass through a sieve having a mesh opening size of 250 μm (60 mesh in terms of mesh of JIS-standard sieve) was determined in terms of % by mass. The value being lower indicates fewer coarse particles, suggesting that the dispersant used is superior in polymerization stability.

(3) Plasticizer absorptivity (CPA) of vinyl chloride polymer particles

A mass of a syringe having a volume of 5 mL, packed with 0.02 g of absorbent cotton, was weighed (defined as X (g)), and then a mass after charging thereinto 0.5 g of the vinyl chloride polymer particles was weighed (defined as Y (g)). Thereinto was charged 1 g of dioctyl phthalate (DOP), and the syringe was left to stand for 15 min. Subsequently, centrifugal separation was performed under conditions involving 3,000 rpm and 40 min to remove unabsorbed DOP, and a mass after removal was weighed (defined as Z (g)). Then, the plasticizer absorptivity (%) of the vinyl chloride polymer particles was determined by the following calculation formula. The plasticizer absorptivity being higher indicates that processing is easier, suggesting mainly that defects generated in the appearance, such as aggregates, are unlikely to appear during processing into a sheet. In this evaluation, the plasticizer absorptivity was assessed as being favorable in a case in which the plasticizer absorptivity was 20.3% or more.

$$\text{plasticizer absorptivity (\%)} = 100 \times [\{Z - X) / (Y - X)\} - 1]$$

Table 1

| | PVA (A) | Usage amount | | | | | | Conversion (%) | Saponification Conditions | | |
|---|---|---|---|---|---|---|---|---|---|---|---|
| | | Vinyl acetate (parts by mass) | Aldehyde | | | | AIBN (parts by mass) | | Concentration of vinyl ester polymer (% by mass) | Molar ratio of NaOH | Moisture percentage (% by mass) |
| | | | type | (parts by mass) | Type | (parts by mass) | | | | | |
| Production Example 1 | PVA-1 | 1,600 | 7-octenal | 17.5 | acetaldehyde | 15 | 1.5 | 45 | 30 | 0.0128 | 1 |
| Production Example 2 | PVA-2 | 1,600 | 7-octenal | 17.5 | acetaldehyde | 15 | 1.5 | 45 | 30 | 0.0150 | 1 |
| Production Example 3 | PVA-3 | 1,600 | 10-undecenal | 43 | - | - | 1.8 | 45 | 30 | 0.0870 | 1 |
| Production Example 4 | PVA-4 | 1,600 | Acetaldehyde | 28 | - | - | 0.9 | 45 | 30 | 0.0097 | 1 |

Table 2

| | PVA (amphipathic substance(B)) | Usage amount | | | | | Conversion (%) | Saponification Conditions | | |
|---|---|---|---|---|---|---|---|---|---|---|
| | | Vinyl acetate (parts by mass) | Methanol (parts by mass) | Chain transfer agent | | AIBN (parts by mass) | | Concentration of vinyl ester polymer (% by mass) | Molar ratio of NaOH | Moisture percentage (% by mass) |
| | | | | type | (parts by mass) | | | | | |
| Production Example 5 | PVA-5 | 1,120 | 480 | 3-mercaptopropionic acid | 5 | 1.2 | 40 | 27 | 0.0042 | 1 |
| Production Example 6 | PVA-6 | 400 | 1,200 | - | - | 3 | 70 | 17.5 | 0.0030 | 1 |

Table 3

| | PVA (A) | | | | | | | Amphipathic substance (B) | | Evaluations | | |
|---|---|---|---|---|---|---|---|---|---|---|---|---|
| | Type | Viscosity-average degree of polymerization | Degree of saponification (mol%) | Content (mol%) | | | | Type | Percentage of addition with respect to PVA (A) (% by mass) | Average particle diameter (μm) | Coarse particles | Plasticizer absorptivity (%) |
| | | | | carbonyl group | alkenyl group | formyl group | group represented by formula (2) ($R^1$ = alkyl group) | | | | | |
| Example 1 | PVA-1 | 445 | 72.8 | 0.22 | 0.14 | 0.15 | 0.20 | sodium lauroyl sarcosinate | 1 | 146.3 | 1.3 | 21.9 |
| Example 2 | PVA-2 | 445 | 78.6 | 0.21 | 0.15 | 0.15 | 0.20 | sodium lauroyl sarcosinate | 1 | 139.1 | 0.9 | 20.5 |
| Example 3 | PVA-3 | 720 | 72.3 | 0.03 | 0.09 | 0.13 | 0.00 | sodium lauroyl sarcosinate | 1 | 144.8 | 1.3 | 20.8 |
| Example 4 | PVA-4 | 760 | 73.0 | 0.11 | 0.00 | 0.00 | 0.11 | sodium lauroyl sarcosinate | 1 | 157.5 | 2.8 | 20.3 |
| Example 5 | PVA-1 | 445 | 72.8 | 0.22 | 0.14 | 0.15 | 0.20 | sodium lauroyl sarcosinate | 3 | 138.4 | 2.3 | 20.5 |
| Example 6 | PVA-1 | 445 | 72.8 | 0.22 | 0.14 | 0.15 | 0.20 | sodium lauroyl sarcosinate | 0.05 | 168.9 | 3.8 | 22.1 |
| Example 7 | PVA-1 | 445 | 72.8 | 0.22 | 0.14 | 0.15 | 0.20 | PVA-5 | 1 | 130.9 | 0.8 | 22.4 |
| Example 8 | PVA-1 | 445 | 72.8 | 0.22 | 0.14 | 0.15 | 0.20 | PVA-5 | 3 | 134.9 | 2.5 | 21.9 |
| Example 9 | PVA-1 | 445 | 72.8 | 0.22 | 0.14 | 0.15 | 0.20 | PVA-5 | 15 | 166.1 | 3.3 | 24.1 |
| Example 10 | PVA-1 | 445 | 72.8 | 0.22 | 0.14 | 0.15 | 0.20 | PVA-6 | 1 | 133.3 | 0.9 | 22.2 |

(continued)

| | PVA (A) | | | | | | | Amphipathic substance (B) | | Evaluations | | |
|---|---|---|---|---|---|---|---|---|---|---|---|---|
| | Type | Viscosity-average degree of polymerization | Degree of saponification (mol%) | Content (mol%) | | | | Type | Percentage of addition with respect to PVA (A) (% by mass) | Average particle diameter (μm) | Coarse particles | Plasticizer absorptivity (%) |
| | | | | carbonyl group | alkenyl group | formyl group | group represented by formula (2) ($R^1$ = alkyl group) | | | | | |
| Comparative Example 1 | PVA-1 | 445 | 72.8 | 0.22 | 0.14 | 0.15 | 0.20 | - | - | 187.2 | 5.4 | 20.1 |
| Comparative Example 2 | PVA-2 | 445 | 78.6 | 0.21 | 0.15 | 0.15 | 0.20 | - | - | 184.9 | 5.5 | 19.3 |
| Comparative Example 3 | PVA-3 | 720 | 72.3 | 0.03 | 0.09 | 0.13 | 0.00 | - | - | 195.2 | 7.1 | 19.7 |

As shown in Table 3, in the case of using each of the compositions of Examples 1 to 10 as the dispersant for suspension polymerization, obtaining vinyl chloride polymer particles having a small average particle diameter, accompanied by few coarse particles, with favorable plasticizer absorptivity was enabled even in the case of carrying out the suspension polymerization under such a high-temperature condition of 65 °C. It was able to confirm that each of the compositions of Examples 1 to 10 was useful as the dispersant for suspension polymerization.

On the other hand, in Comparative Examples 1 to 3, the vinyl chloride polymer particles obtained had a large average particle diameter, accompanied by many coarse particles, in the case of the suspension polymerization under high-temperature conditions. The results also indicated poor plasticizer absorptivity.

[INDUSTRIAL APPLICABILITY]

The composition of the present invention can be used for, e.g., a dispersant in suspension polymerization of a vinyl compound.

## Claims

1. A composition comprising: a vinyl alcohol polymer (A); and an amphipathic substance (B), wherein

    the vinyl alcohol polymer (A) is a vinyl alcohol polymer comprising a carbonyl group and having a degree of saponification of 60 mol% or more, and
    the amphipathic substance (B) comprises at least one selected from a group consisting of a vinyl alcohol polymer having a degree of saponification of less than 60 mol%, and a surfactant.

2. The composition according to claim 1, wherein the vinyl alcohol polymer (A) further comprises a formyl group and an alkenyl group.

3. The composition according to claim 1, wherein the vinyl alcohol polymer (A) has a structure represented by following formula (1) comprising the carbonyl group,

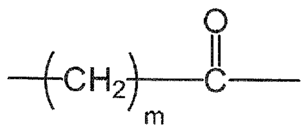

( 1 )

wherein, in the formula (1), m is an integer of 1 to 11.

4. The composition according to claim 1, wherein the vinyl alcohol polymer (A) comprises, at an end of a polymer chain, a group represented by following formula (2) comprising the carbonyl group,

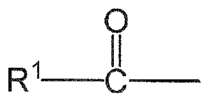

( 2 )

wherein, in the formula (2), $R^1$ represents an alkenyl group or an alkyl group.

5. The composition according to claim 4, wherein $R^1$ in the formula (2) represents the alkenyl group, and the alkenyl group comprises a methylene group at an end on a side of the carbonyl group.

6. The composition according to claim 1, wherein the vinyl alcohol polymer (A) comprises a tertiary carbon atom.

7. The composition according to claim 1, wherein the vinyl alcohol polymer (A) comprises a structural unit derived from an unsaturated aliphatic aldehyde.

8. The composition according to claim 7, wherein the unsaturated aliphatic aldehyde has 3 to 14 carbon atoms.

9. The composition according to claim 7, wherein the unsaturated aliphatic aldehyde comprises, at an end thereof, a

carbon-carbon double bond.

**10.** The composition according to any one of claims 1 to 9, wherein the amphipathic substance (B) comprises, as the surfactant, at least one selected from a group consisting of an anionic surfactant and a nonionic surfactant.

**11.** The composition according to claim 10, wherein the amphipathic substance (B) comprises, as the anionic surfactant, at least one selected from a group consisting of an acyl amino acid salt and an acyl taurine salt.

**12.** The composition according to any one of claims 1 to 9, wherein the amphipathic substance (B) comprises, as the vinyl alcohol polymer having a degree of saponification of less than 60 mol%, an anion-modified vinyl alcohol polymer having a degree of saponification of less than 60 mol%.

**13.** The composition according to claim 12, wherein the amphipathic substance (B) comprises, as the anion-modified vinyl alcohol polymer having a degree of saponification of less than 60 mol%, a carboxylic acid-modified vinyl alcohol polymer having a degree of saponification of less than 60 mol%.

**14.** The composition according to any one of claims 1 to 9, wherein a content of the amphipathic substance (B) is 0.001% by mass or more and 30% by mass or less, with respect to the vinyl alcohol polymer (A).

**15.** A dispersant for suspension polymerization comprising the composition according to any one of claims 1 to 9.

**16.** A method for producing a vinyl polymer, the method comprising:

subjecting a vinyl compound to polymerization in the presence of a vinyl alcohol polymer (A) and an amphipathic substance (B), wherein
the vinyl alcohol polymer (A) is a vinyl alcohol polymer comprising a carbonyl group and having a degree of saponification of 60 mol% or more, and
the amphipathic substance (B) comprises at least one selected from a group consisting of a vinyl alcohol polymer having a degree of saponification of less than 60 mol%, and a surfactant.

**INTERNATIONAL SEARCH REPORT**

International application No. **PCT/JP2023/036477**

**A. CLASSIFICATION OF SUBJECT MATTER**

***C08L 29/04***(2006.01)i; ***C08F 8/12***(2006.01)i; ***C08F 16/34***(2006.01)i; ***C08F 18/08***(2006.01)i
FI: C08L29/04 Z; C08F8/12; C08F18/08; C08F16/34

According to International Patent Classification (IPC) or to both national classification and IPC

**B. FIELDS SEARCHED**

Minimum documentation searched (classification system followed by classification symbols)

C08L29/04; C08F8/12; C08F16/34; C08F18/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2015/019614 A1 (KURARAY CO., LTD.) 12 February 2015 (2015-02-12) claims 1, 3-5, paragraphs [0009], [0059]-[0060], examples | 1-16 |
| Y | WO 2014/104160 A1 (KURARAY CO., LTD.) 03 July 2014 (2014-07-03) claims 1-5, paragraphs [0007], [0026]-[0030], [0056]-[0057], [0059], examples | 1-16 |
| Y | WO 2022/071345 A1 (KURARAY CO., LTD.) 07 April 2022 (2022-04-07) claims 1-12, paragraphs [0005]-[0006], [0055], [0059], [0062], examples | 1-16 |
| Y | WO 2015/194611 A1 (SUMITOMO CHEMICAL COMPANY, LIMITED) 23 December 2015 (2015-12-23) claims 1, 9, paragraph [0036] | 11 |
| A | | 1-10, 12-16 |
| A | WO 2017/094698 A1 (JAPAN VAM & POVAL CO., LTD.) 08 June 2017 (2017-06-08) | 1-16 |
| A | WO 2018/096937 A1 (DENKA COMPANY LIMITED) 31 May 2018 (2018-05-31) | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/036477**

**C. DOCUMENTS CONSIDERED TO BE RELEVANT**

| Category* | Citation of document, with indication, where appropriate, of the relevant passages | Relevant to claim No. |
|---|---|---|
| A | WO 2021/100638 A1 (KURARAY CO., LTD.) 27 May 2021 (2021-05-27) | 1-16 |
| A | WO 2019/031461 A1 (KURARAY CO., LTD.) 14 February 2019 (2019-02-14) | 1-16 |

Form PCT/ISA/210 (second sheet) (January 2015)

**INTERNATIONAL SEARCH REPORT**
**Information on patent family members**

International application No.
**PCT/JP2023/036477**

| Patent document cited in search report | Publication date (day/month/year) | Patent family member(s) | Publication date (day/month/year) |
|---|---|---|---|
| WO 2015/019614 A1 | 12 February 2015 | US 2016/0194412 A1<br>claims 1, 3-5, paragraphs [0010], [0066]-[0067], examples<br>EP 3031830 A1<br>CN 105452308 A<br>KR 10-2016-0042042 A<br>TW 201512227 A | |
| WO 2014/104160 A1 | 03 July 2014 | US 2015/0329713 A1<br>claims 1-5, paragraphs [0009], [0031]-[0032], [0057]-[0058], [0060], examples<br>CN 104870497 A<br>KR 10-2015-0100906 A<br>TW 201429998 A | |
| WO 2022/071345 A1 | 07 April 2022 | EP 4223800 A1<br>claims 1-12, paragraphs [0005]-[0006], [0051], [0053], [0056], examples<br>CN 116457381 A<br>TW 202222853 A | |
| WO 2015/194611 A1 | 23 December 2015 | CN 106459241 A<br>KR 10-2017-0028308 A<br>TW 201606002 A | |
| WO 2017/094698 A1 | 08 June 2017 | US 2019/0031872 A1<br>EP 3385287 A1<br>CN 108290968 A<br>TW 201729897 A | |
| WO 2018/096937 A1 | 31 May 2018 | TW 201829479 A | |
| WO 2021/100638 A1 | 27 May 2021 | US 2023/0021123 A1<br>EP 4063401 A1<br>CN 114651017 A<br>KR 10-2022-0104750 A<br>TW 202124457 A | |
| WO 2019/031461 A1 | 14 February 2019 | US 2020/0247915 A1<br>EP 3666803 A1<br>CN 110891983 A<br>KR 10-2020-0038973 A<br>TW 201920305 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022071345 A